# EUROPÄISCHE PATENTSCHRIFT

(11) **EP 1 407 815 B1**
(45) Veröffentlichungstag und Bekanntmachung des Hinweises auf die Patenterteilung: **23.11.2005**
(21) Anmeldenummer: 03021518.0
(22) Anmeldetag: 24.09.2003
(51) Int. Cl.: B01J 2/16, B01J 8/44

(54) **Vorrichtung zum Behandeln von partikelförmigem Gut mit einer Höhenverstellvorrichtung**
Apparatus for treating a particulate material with a height adjustment device
Installation pour traiter une matière particulaire avec un dispositf de réglage de la hauteur

(30) Priorität: 07.10.2002 DE 10248116
(43) Veröffentlichungstag der Anmeldung: 14.04.2004
(73) Patentinhaber: Hüttlin, Herbert, Dr. h.c., 79539 Lörrach (DE)
(72) Erfinder: Hüttlin, Herbert, Dr. h.c., 79539 Lörrach (DE)
(74) Vertreter: Weller, Wolfgang

(56) Entgegenhaltungen:
- DE-A- 10 054 557
- GB-A- 749 915
- US-A- 2 513 369
- PATENT ABSTRACTS OF JAPAN vol. 015, no. 069 (M-1083), 19. Februar 1991 (1991-02-19) & JP 02 293582 A (UBE IND LTD), 4. Dezember 1990 (1990-12-04)

## Beschreibung

Die Erfindung betrifft eine Vorrichtung zum Behandeln von partikelförmigem Gut, mit einer Prozeßkammer zum Aufnehmen und zum Behandeln des Gutes, wobei ein Boden der Prozeßkammer aus in verschiedenen Ebenen übereinander gelegten, sich einander überlappenden Leitplatten aufgebaut ist, zwischen denen Schlitze ausgebildet sind, über die Prozeßluft mit einer im wesentlichen horizontalen Bewegungskomponente in die Prozeßkammer einführbar ist.

Derartige Vorrichtungen sind beispielsweise aus der DE 199 04 147 C2 und der DE 100 54 557 A1 bekannt.

Derartige Vorrichtungen dienen dazu, um ein partikelförmiges Gut zu trocknen, zu granulieren oder zu coaten.

Ein gasförmiges Medium, sogenannte Prozeßluft, wird über den Boden in die Prozeßkammer eingeführt und tritt dabei durch die zahlreichen Schlitze zwischen den sich überlappenden Leitplatten etwa horizontal gerichtet in die Prozeßkammer ein.

In den Ursprüngen dieser Technologie wurden die Leitplatten schuppenartig übereinandergelegt zu einem Ringkranz zusammengebaut, so daß sich die Schlitze radial erstrecken. Die schräg angestellten, sich schuppenartig überlappenden Leitplatten bilden allerdings eine relativ inhomogene bzw. wellige Oberfläche des Bodens.

In der Weiterentwicklung dieser Technologie wurden die Leitplatten so ausgestaltet, daß diese in verschiedenen horizontalen Ebenen liegend übereinander gelegt werden. Gegenstand der vorliegenden Anmeldung sind solchermaßen ausgestaltete Böden.

Bei der eingangs erwähnten DE 199 04 147 C2 erstrecken sich die Schlitze längs Sekanten eines kreisförmigen Bodens. Hier existieren zwei Gruppen an jeweils übereinander gelegten ebenen Leitplatten, wobei die Schlitze so ausgerichtet sind, daß sie die durchtretende Prozeßluft auf eine mittige diagonale Aufbruchzone leiten.

Bei der DE 100 54 557 sind die Schlitze im äußeren Umfangsbereich der Außenkontur der runden Prozeßkammer angepaßt und nähern sich, radial nach innen gesehen, immer mehr der Kontur der geradlinigen diagonalen Aufbruchzone.

Bei der unveröffentlichten deutschen Patentanmeldung mit dem Aktenzeichen 102 02 584.3 sind die Schlitze so ausgebildet, daß sie eine exzentrisch zum Mittelpunkt des Bodens angeordnete Sprühdüse umlaufen.

Bei der unveröffentlichten deutschen Patentanmeldung mit dem Aktenzeichen 101 29 166.3 sind die Leitplatten als Ringbleche ausgebildet, so daß kreisförmige Schlitze ausgebildet sind.

Es ist ein Bestreben bei dieser Technologie, die hauptsächlich im pharmazeutischen Gebiet Einsatz findet, möglichst mit einer einzigen Apparatur unterschiedliche Produktarten behandeln zu können. Die Bandbreite des partikelförmigen Gutes reicht dabei von staubfeinen Pulvern, die meist zu größeren Agglomeraten granuliert werden sollen, bis zu relativ großen Tabletten oder Oblongs, die mit einer Überzugsschicht überzogen werden sollen.

Problematisch ist auch das Befüllen und Entleeren der Prozeßkammer, wobei insbesondere bei sehr feinteiligem Gut die Gefahr besteht, daß Gutteilchen über die Schlitze durch den Boden hindurch aus der Prozeßkammer heraustreten und in die die Prozeßluft führenden Gänge eintritt.

Dies führt zu erheblichen Problemen bei der Reinigung, was beispielsweise bei der Umstellung auf andere Produkte ein völliges Zerlegen der Vorrichtung zu Reinigungszwecken notwendig macht.

Es ist daher Aufgabe der vorliegenden Erfindung, eine Vorrichtung der eingangs genannten Art dahingehend weiterzuentwickeln, daß eine möglichst große Bandbreite an partikelförmigem Gut mit einem hervorragenden Ergebnis behandelt werden kann.

Erfindungsgemäß wird die Aufgabe dadurch gelöst, daß eine mit den Leitplatten in Wirkverbindung stehende Höhenverstellvorrichtung vorhanden ist, durch die der Abstand der Leitplatten untereinander und somit die Höhe der Schlitze veränderbar ist.

Durch die Höhenverstellbarkeit ist ein zusätzlicher variabler Parameter geschaffen, durch den flexibel auf unterschiedliche Gutteilchen reagiert werden kann. Je nach Befüllungsgrad, nach Größe des zu bewegenden partikelförmigen Gutes und dessen Eigenschaften, sich auf einem Luftpolster zu einem gleichförmigen Wirbelbett verwirbeln zu lassen, können die Leitplatten angehoben oder abgesenkt werden und damit die Höhe der Schlitze variiert werden. Ein größerer Austrittsquerschnitt ermöglicht höhere Durchtrittsmengen pro Zeiteinheit an Prozeßluft durch den Boden, so daß auf unterschiedlich große Chargen und/oder unterschiedliche Gutteilchen flexibel reagiert werden kann.

In einer weiteren Ausgestaltung der Erfindung ist die Höhenverstellvorrichtung derart ausgebildet, daß der Höhenabstand der Leitplatten von Null bis zu einem Maximalabstand veränderbar ist.

Diese Ausgestaltung hat nicht nur den zuvor erwähnten Vorteil der Höhenregulierbarkeit als solcher, sondern eröffnet auch die Möglichkeit, die Platten mit einem Abstand Null aufeinander zu legen, so daß dann überhaupt keine offenen Schlitze mehr vorhanden sind. Dieser Zustand ist insbesondere beim Befüllen und Entleeren der Prozeßkammer wünschenswert, wenn beispielsweise dazu der ganze Produktbehälter seitlich verkippt wird. Dadurch kann dann ausgeschlossen werden, daß Gutteilchen durch den Boden hindurch fallen und in die Luftführungswege gelangen. Es können dadurch nicht nur diese unerwünschten Verluste an Gutteilchen vermieden werden, die bei sehr teuren Pharmazeutika einen beträchtlichen Wert darstellen, sondern die gesamte Vorrichtung ist auch wesentlich einfacher zu reinigen. Die Höhenverstellvorrichtung öffnet die Schlitze erst dann, wenn schon ein ausreichender Druck an Prozeßluft auf die Unterseite des Bodens wirkt, so daß während des Betriebes dauernd verhindert ist, daß überhaupt Teilchen durch den Boden hindurch fallen können.

In einer weiteren Ausgestaltung der Erfindung ist die Höhenverstellvorrichtung derart ausgebildet, daß die Leitplatten in Richtung der Höhenverstellbarkeit hin- und hervibrierbar sind.

Diese Maßnahme hat den erheblichen Vorteil, daß die nun grundsätzlich vorhandene Höhenverstellbarkeit dazu herangezogen wird, im Betrieb die Leitplatten in der Verstellrichtung mit geringer Amplitude hin- und herzuvibrieren, so daß eventuelle Anbackungen auf der Oberseite abgelöst werden oder sich überhaupt nicht ausbilden können. Dies fördert auch die Ausbildung eines Luftkissenpolsters zwischen der Oberseite der Leitplatten bzw. des Bodens und dem unteren Ende des Wirbelbettes, so daß eine besonders sanfte Behandlung bei äußerst empfindlichem Gut durchgeführt werden kann.

In einer weiteren Ausgestaltung der Erfindung weist die Höhenverstellvorrichtung zumindest eine Verstelltraverse auf, die mit jeder der Leitplatten verbunden ist.

Durch Vorsehen einer solchen Verstelltraverse ist ein mechanisch einfaches Bauelement gegeben, um die Platten über eine einfache Kopplung anzuheben bzw. abzusenken.

In einer weiteren Ausgestaltung weist die Höhenverstellvorrichtung ein zentral im Boden angeordnetes Höhenverstellorgan auf.

Diese Maßnahme hat den Vorteil, daß nicht nur ein einziges Stellorgan ausreichend ist, um die Höhenverstellbarkeit zu steuern, sondern die mittige Anordnung beeinflußt die Strömung außermittig nicht, stellt also kein zusätzliches problematisches Strömungshindernis dar. Bei vielen Bodenkonstruktionen ist ja ohnehin mittig ein abgeschlossener Bereich, beispielsweise ein mittiger Kegel, vorhanden, um den sich ein toroidal rotierendes Band an bewegtem Gut ausbildet.

Die mittige zentrale Anordnung eröffnet auch die Möglichkeit, die Höhenverstellvorrichtung unmittelbar am Boden anzubringen, so daß der Boden samt integrierter Höhenverstellvorrichtung in einem einzigen Vorgang entnommen oder eingesetzt werden kann.

In einer weiteren Ausgestaltung der Erfindung ist bei einem Boden, der, radial von außen nach radial innen gesehen, aus übereinander gelegten ringförmigen Leitplatten besteht, ein mittiges stehendes Höhenstellorgan vorhanden, das mit einem radial inneren Ende einer Quertraverse verbunden ist, die am radial äußeren Ende schwenkbar angelenkt ist.

Diese Maßnahme hat konstruktiv den erheblichen Vorteil, daß über die Quertraverse die Verbindung mit den einzelnen ringförmigen Leitplatten hergestellt werden kann, und das einzige mittige Höhenverstellorgan durch Anheben und Absenken der Quertraverse die entsprechende synchrone Höhenverstellung aller Leitplatten, die mit der Quertraverse verbunden sind, bewirkt. Dies ergibt die zuvor erwähnten Vorteile der kompakten Bauweise und der Integrierung der Höhenverstellvorrichtung unmittelbar in den Boden.

Es ist auch möglich, die Höhenverstellvorrichtung am äußeren Rand des Bodens bzw. der Vorrichtung vorzusehen.

In einer weiteren Ausgestaltung der Vorrichtung ist das Höhenverstellorgan als Druckluft-Justierbolzen ausgebildet.

Diese Maßnahme hat zum einen den Vorteil, daß über die Druckluftsteuerung einfach die Höhenverstellbarkeit bewerkstelligt werden und durch eine gepulste Druckluftzufuhr auch zugleich die zuvor erwähnte Vibration des Bodens bewerkstelligt werden kann.

In einer weiteren Ausgestaltung der Erfindung ist die Höhenverstellvorrichtung unterhalb des Bodens angeordnet.

Diese Maßnahme hat den erheblichen Vorteil, daß die Höhenverstellvorrichtung keine Bauelemente in der eigentlichen Prozeßkammer aufweist, sondern diese Bauelemente alle unterhalb des Bodens vorhanden sind. Die Prozeßluft, die den Boden von unten anströmt, kann die notwendigen Bauelemente der Höhenverstellvorrichtung problemlos umströmen und durch den Boden hindurchtreten.

In einer weiteren Ausgestaltung der Erfindung weist die Verstelltraverse mehrere, sich radial erstreckende, insbesondere drei bis sechs Quertraversen, auf.

Diese Maßnahme hat den Vorteil, daß je nach Ausgestaltung und Größe des Bodens eine mechanisch sichere und eindeutig gesteuerte Höhenverstellbarkeit gegeben ist. Greift man auf das zuvor erwähnte Beispiel mit den mehreren übereinander gelegten Ringblechen zurück, können schon drei etwa um 120° winkelversetzte Traversen ausreichend sein, um die gleichmäßige Anhebung über den gesamten Ringumfang sicherzustellen. Es können aber auch vier oder sechs Traversen vorgesehen sein.

Da bei der Ausgestaltung als Ringbleche das mittigste Blech geschlossen als Scheibe ausgebildet ist, kann in diesem Bereich, insbesondere unterhalb des Bodens, das Höhenverstellorgan angeordnet werden, um die zuvor erwähnten Vorteile zu erzielen.

In einer weiteren Ausgestaltung der Erfindung steht bei einem Boden, der aus unterschiedlichen Gruppen an übereinander gelegten Leitplatten aufgebaut ist, jede Gruppe mit einer Höhenverstellvorrichtung in Wirkverbindung.

Bei der eingangs erwähnten deutschen Patentanmeldung mit dem Aktenzeichen 101 29 166.3 ist eine erste Gruppe an übereinander gelegten Ringblechen vorhanden, die radial von außen nach innen gesehen, untereinander gelegt sind, gefolgt, nach einer ringförmigen Aufbruchzone, von einer- weiteren Gruppe, die von radial außen nach radial innen gesehen, übereinander gelegt sind. Hier kann vorgesehen sein, zwei separate Höhenverstellvorrichtungen vorzusehen, um die beiden Gruppen an Leitplatten einzeln ansteuern zu können, was noch eine weitere Erhöhung der Flexibilität schafft, nämlich, daß man bei unterschiedlichen Gruppen an Leitplatten unterschiedliche Schlitzhöhen einstellen kann.

Ein Ausführungsbeispiel einer besonders konstruktiv einfachen Realisierung einer Höhenverstellbarkeit wird nachfolgend beschrieben.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nachfolgend anhand des zuvor erwähnten ausgeführten Ausführungsbeispiels im Zusammenhang mit den beiliegenden Zeichnungen näher beschrieben und erläutert. Es zeigen:
- Fig. 1: stark schematisiert einen Längsschnitt einer Vorrichtung zum Behandeln von partikelförmigem Gut im Bereich des Bodens und der Anströmkammer;
- Fig. 2: eine der Fig. 1 entsprechende Darstellung der Vorrichtung im Betrieb mit gegenüber der Darstellung von Fig. 1 in der Höhe verstellten Leitplatten;
- Fig. 3: eine Draufsicht auf den Boden der Vorrichtung von Fig. 1;
- Fig. 4: eine Unteransicht des Bodens von Fig. 3, wobei der umgrenzte Bereich zusätzlich stark vergrößert dargestellt ist; und
- Fig. 5: eine ausschnittsweise, teilweise stark vergrößerte Darstellung des Schnittes von Fig. 2 im linken Randbereich und im mittigen zentralen Bereich.
Die in den Figuren dargestellte Vorrichtung zum Behandeln von partikelförmigem Gut ist in ihrer Gesamtheit mit der Bezugsziffer 10 versehen.

Die Vorrichtung 10 weist einen Behälter 12 mit einer sich nach außen konisch erweiternden Wand auf. Der Behälter 12 ist an seiner hier nicht dargestellten Oberseite über einen Deckel verschlossen. Der Innenraum des Behälters 12 stellt eine Prozeßkammer 13 dar. Am unteren Ende des Behälters 12 ist ein umlaufender Ringflansch 14 vorhanden.

An die Unterseite des Ringflansches 14 ist unter Zwischenlegung eines Zwischenflansches 24 ein Ringflansch 20 einer Anströmkammer 16 angeflanscht. Die Anströmkammer 16 ist mit einem Einlaß 18 versehen, über den Prozeßluft, wie das nachfolgend noch beschrieben wird, einführbar ist.

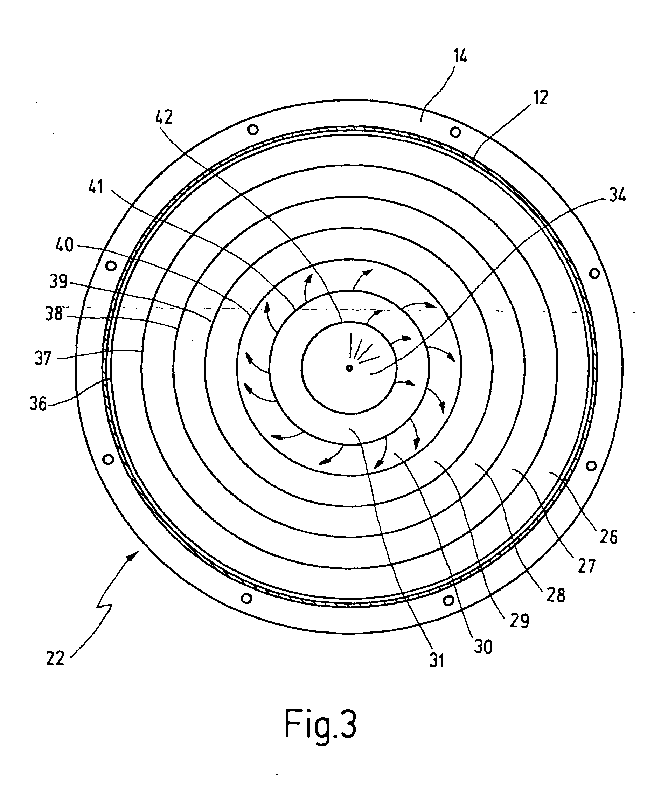

Der Zwischenflansch 24 ist Teil eines Bodens 22 der Vorrichtung 10, der aus einer Serie von sechs ringförmigen Leitplatten 26 bis 31 zusammengesetzt ist, wie das insbesondere aus den Schnittdarstellungen und der Draufsicht von Fig. 3 ersichtlich ist. Den mittigen Abschluß bildet eine Scheibe 32, auf deren Oberseite, also sich in die Prozeßkammer 13 hinein erstreckend, ein Kegel 34 montiert ist.

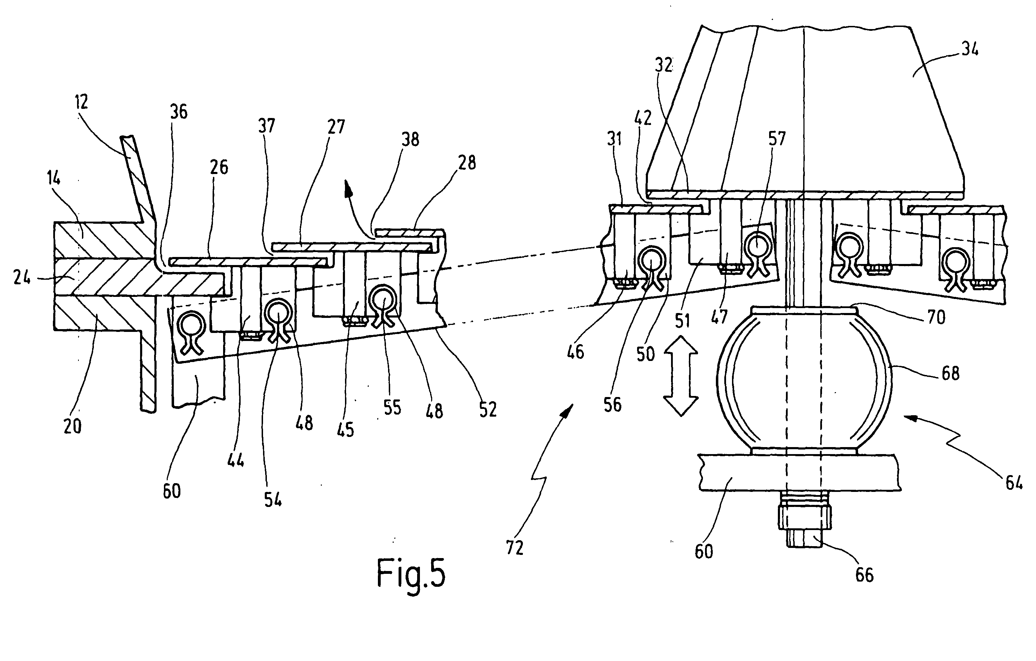

Wie insbesondere aus den Darstellungen von Fig. 3 und von Fig. 5 auf der linken Seite ersichtlich ist, ist zwischen dem Zwischenflansch 24 und der äußersten Leitplatte 26 ein Schlitz 36 ausgebildet.

Dementsprechend ist zwischen der Leitplatte 26 und der durchmessergeringeren, über dieser angeordneten, nächst inneren Leitplatte 27 ein Schlitz 37 ausgebildet.

Gleiches gilt dann für die nächst innere Leitplatte 28. Diese liegt in einer weiteren horizontalen Ebene und über der Leitplatte 27, so daß dadurch dann ein Schlitz 38 ausgebildet ist. Dies setzt sich entsprechend fort, bis zur innersten, am höchsten gelegenen Leitplatte 31, wobei die mittige Scheibe 32 am höchsten liegt, so daß zwischen der Scheibe 32 und der innersten Leitplatte 31 der innerste Schlitz 42 ausgebildet ist.

Die ringförmigen Leitplatten 26 bis 31 liegen also in unterschiedlichen horizontalen Ebenen und sind so übereinander gelegt, daß sie sich einander überlappen, wobei eine radial innere Leitplatte die jeweils unter ihr liegende radial nächste äußere Leitplatte überlappt.

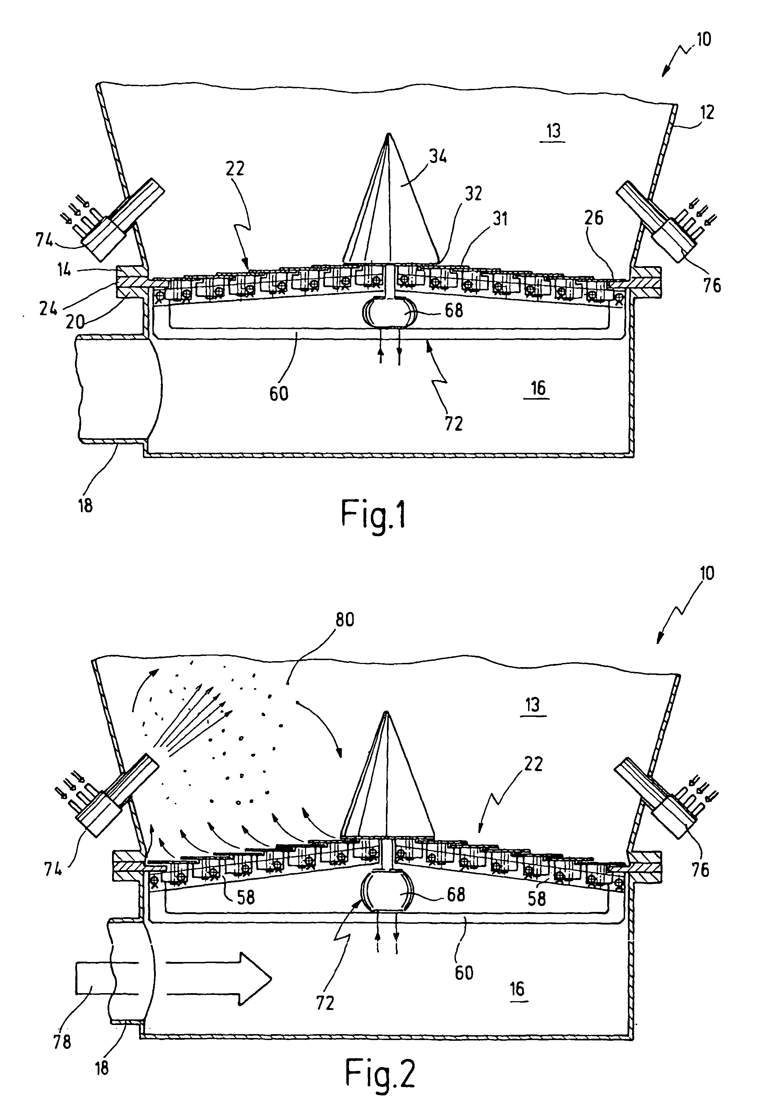

Dadurch sind die Schlitze so ausgerichtet, daß Prozeßluft 78 (siehe Fig. 2), die in die Anströmkammer 16 eingeführt wird, derart durch die Schlitze 36 bis 42 geführt wird, daß diese radial nach außen gerichtet austritt.

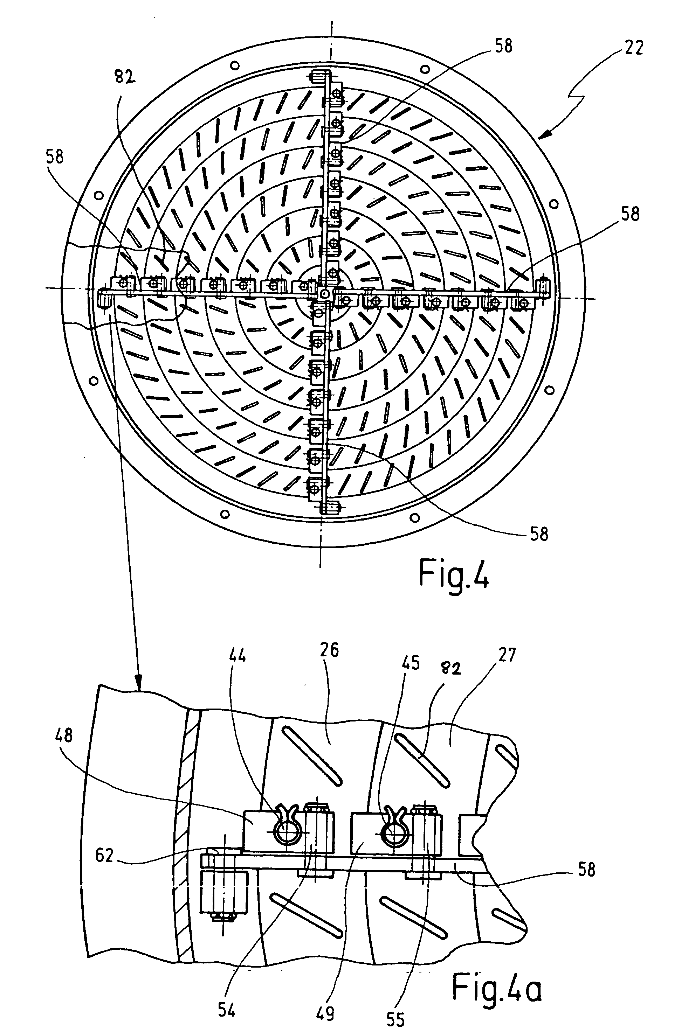

Wie insbesondere aus Fig. 4 zu entnehmen ist, sind an der Unterseite der Leitplatten 26 bis 31 zahlreiche Leitelemente 32 angeordnet, die der austretenden Prozeßluft noch zusätzlich zu der radialen eine umfängliche Strömungskomponente auferlegen, wie das durch die Strömungspfeile in Fig. 3 ersichtlich ist. Dies fördert die Ausbildung eines sich um den mittigen Kegel 34 in einer bestimmten Richtung, hier im Uhrzeigersinn drehendes, toroidalen Wirbelbandes.

Insbesondere aus der Darstellung von Fig. 4 und 5 ist ersichtlich, daß von der Unterseite jeder Leitplatte 26 nach unten Steckbolzen vorstehen. Von der Unterseite der Leitplatte 26 stehen vier, jeweils um 90° umfänglich versetzte Steckbolzen 44 vor. Dies gilt gleichermaßen für die anderen Leitplatten, wobei in Fig. 5 dementsprechend ein Steckbolzen 45, der von der Unterseite der Leitplatte 27 vorspringt, sowie die Steckbolzen 46 und 47 ersichtlich sind, die von der Unterseite der Leitplatte 31 bzw. der Scheibe 32 vorspringen.

Jeder der vier Steckbolzen, die von der Unterseite jeder ringförmigen Leitplatte 26 bis 31 vorspringen, bzw. die vier von der Unterseite der Scheibe 32 vorspringenden Steckbolzen, sind in Verbindungselemente eingesteckt und über einen Sprengring gesichert.

In Fig. 4 sind dazu stellvertretend die verbindungselemente 48 und 49, in Fig. 5 entsprechend die Verbindungselemente 50 und 51 gekennzeichnet.

Eine solche Reihe an Verbindungselementen 48 bis 51 ist mit einer Verstelltraverse 52 verbunden.

Dies erfolgt über Bolzen, wobei hier wieder in Fig. 4 die entsprechenden Bolzen 54 und 55, und in Fig. 5 die entsprechenden Bolzen 56 und 57 dargestellt sind. Diese Bolzen verlaufen quer zu den Steckbolzen und sind neben diesen angeordnet und sind ebenfalls als Steckbolzen ausgebildet und über entsprechende, hier nicht näher gekennzeichnete Sprengringe gesichert, wie das insbesondere aus Fig. 4 ersichtlich ist.

Die Verstelltraverse 52 besteht aus vier jeweils um 90° winkelversetzten, etwa balkenförmigen Quertraversen 58. Jede Quertraverse 58 erstreckt sich vom Zwischenflansch 24 bis hin zur Unterseite der mittigen Scheibe 32.

Der Zwischenflansch 24 ist über einen Bügel 60 quer verstrebt. An dem Bügel 60 ist das radial äußere Ende einer Quertraverse 58 über ein Gelenk 62 schwenkbar angelenkt. Das radial innere Ende einer Quertraverse 58 ist, wie zuvor erwähnt, über den innersten Bolzen 57 schwenkbar an dem Verbindungselement 51, das von der Unterseite der Scheibe 32 vorspringt, schwenkbar angelenkt.

Alle geschilderten Steckbolzenverbindungen sind so ausgebildet, daß diese um die Bolzenachse schwenkbar sind, und zwar mit einem gewissen radialen Spiel.

Wie insbesondere aus den Schnittdarstellungen von Fig. 1, 2 und 5 ersichtlich, ist ein zentrales mittiges Höhenverstellorgan 64 vorgesehen.

Dieses Höhenverstellorgan 64 besteht aus einem Justierbolzen 66, der von einem Balg 68 umgeben ist.

Der Balg 68 stützt sich bodenseitig auf dem Bügel 60 ab, in dem auch der Justierbolzen 66 verschiebbar aufgenommen ist. Am oberen Ende stützt sich der Balg 68 an einer Scheibe 70 ab, die fest mit dem Justierbolzen 66 verbunden ist.

Der Zusammenbau aus Höhenverstellorgan 64 und den Quertraversen 58, die mit der Unterseite der Leitplatten verbunden sind, stellt in der Gesamtheit eine Höhenverstellvorrichtung 72 dar.

Wird Druckluft in den Balg 68 eingeführt, bläht dieser auf und hebt die Quertraversen 58 an und hebt somit auch die Leitplatten 26 bis 31 an. Wird der Balg 68 mit pulsierender Druckluft beaufschlagt, vibriert bzw. schwingt die ganze Höhenverstellvorrichtung 72 um ein bestimmtes Höhenniveau nach oben und unten.

In Fig. 1 ist eine Position dargestellt, in der sich die Höhenverstellvorrichtung 72 in ihrer maximal abgesenkten Position befindet. In dieser Stellung liegen alle Leitplatten 26 bis 31 aufeinander, die mittige Scheibe 32 liegt auf der Leitplatte 31, und die äußerste Leitplatte 26 liegt auf dem Zwischenflansch 24, so daß zwischen diesen keine offenen Schlitze mehr vorhanden sind. Der Boden 22 ist somit geschlossen. Er kann in diesem Zustand beispielsweise mit einem zu behandelnden Gut befüllt werden oder nach einer Behandlung zum Entleeren des Gutes seitlich abgekippt werden. Durch die kompakte Bauweise kann der Boden 22 samt Höhenverstellvorrichtung 72 als Baueinheit entnommen oder eingesetzt werden.

Aus Fig. 1 ist ersichtlich, daß seitlich in die Wand des Behälters 12 noch Düsen 74 bzw. 76 eingesteckt sind, um das zu behandelnde Gut mit einem Behandlungsmedium zu beaufschlagen.

Beim Granulieren von feinstäubigen Gutpartikeln zu größeren Agglomeraten wird dies beispielsweise eine klebrige Flüssigkeit sein, die zusammen mit Sprühluft zu einem feinen Sprühnebel versprüht wird.

In Fig. 2 ist eine Betriebsstellung dargestellt, bei der der Balg 68 etwas aufgebläht ist, dadurch wurden die Quertraversen 58 angehoben, und die Leitplatten 26 bis 31 liegen nun in einem gewissen Abstand übereinander, so daß die in Fig. 3 näher bezeichneten Schlitze 37 bis 42 zum Durchführen der Prozeßluft 78 geöffnet sind. Daher kann die über den Einlaß 18 in die Anströmkammer 16 eintretende Prozeßluft 78 durch diese Schlitze 36 bis 42 durch den Boden 22 hindurch treten und zunächst etwa horizontal verlaufend austreten, wobei die Leitelemente 32 an der Unterseite der Leitplatten noch den entsprechenden umfänglichen Richtungsschub geben.

Die feinen Gutteilchen 80 werden durch die nach oben strebende Prozeßluft 78 zu einem sich toroidal um den mittigen Kegel 34 drehenden Bett verwirbelt.

Wie aus der Schnittdarstellung von Fig. 2 ersichtlich ist, steigen die Gutteilchen im wesentlichen im Bereich der Düsen 74, 76, also im Bereich der Wand des Behälters 12, an, werden dann mittig nach innen bewegt und fallen aufgrund der Schwerkraft wieder auf den Boden 22 ab. Anschließend werden sie durch den mittigen Kegel 34 wieder zum radial innersten Schlitz 42 befördert und von dort an wieder in dem entsprechenden Kreislauf bewegt.

Wird der Balg 68 pulsierend betrieben, vibriert der Boden 22 mit geringer Amplitude, so daß Anbackungen verhindert werden können. Je nachdem, wie das zu behandelnde Gut 80 ausgestaltet wird, wird die Höhenverstellvorrichtung 72 betätigt, um eine optimale Schlitzhöhe zu erzielen, wie sie beispielsweise in Fig. 5 dargestellt ist.

## Patentansprüche

1. Vorrichtung zum Behandeln von partikelförmigem Gut (80), mit einer Prozeßkammer (13) zum Aufnehmen und zum Behandeln des Gutes (80), wobei ein Boden (22) der Prozeßkammer (13) aus in verschiedenen Ebenen übereinander gelegten, sich einander überlappenden Leitplatten (26 - 31) aufgebaut ist, zwischen denen Schlitze (36 - 42) ausgebildet sind, über die Prozeßluft (78) mit einer im wesentlichen horizontalen Bewegungskomponente in die Prozeßkammer (13) einführbar ist, **dadurch gekennzeichnet, daß** eine mit den Leitplatten (26 - 31) in Wirkverbindung stehende Höhenverstellvorrichtung (72) vorhanden ist, durch die der Abstand der Leitplatten (26 - 31) untereinander und somit die Höhe der Schlitze (36 - 42) veränderbar ist.

2. Vorrichtung nach Anspruch 1, **dadurch gekennzeichnet, daß** die Höhenverstellvorrichtung (72) derart ausgebildet ist, daß der Höhenabstand der Leitplatten (26 - 31) von Null bis zu einem Maximalabstand veränderbar ist.

3. Vorrichtung nach Anspruch 1 oder 2, **dadurch gekennzeichnet, daß** die Höhenverstellvorrichtung (72) derart ausgebildet ist, daß die Leitplatten (26 - 31) in Richtung der Höhenverstellbarkeit hin- und hervibrierbar sind.

4. Vorrichtung nach einem der Ansprüche 1 bis 3, **dadurch gekennzeichnet, daß** die Höhenverstellvorrichtung (72) zumindest eine Verstelltraverse (52) aufweist, die mit jeder der Leitplatten (26 - 31) verbunden ist.

5. Vorrichtung nach einem der Ansprüche 1 bis 4, **dadurch gekennzeichnet, daß** die Höhenverstellvorrichtung (72) ein zentral im Boden (22) angeordnetes Höhenverstellorgan (64) aufweist.

6. Vorrichtung nach Anspruch 5, **dadurch gekennzeichnet, daß** bei einem Boden (22), der, radial von außen nach innen gesehen, aus übereinander gelegten ringförmigen Leitplatten (26 - 31) besteht, ein mittiges stehendes Höhenverstellorgan (64) vorhanden ist, das mit einem radial inneren Ende einer Quertraverse (58) verbunden ist, -die an deren radial äußeren Ende schwenkbar angelenkt ist.

7. Vorrichtung nach Anspruch 5 oder 6, **dadurch gekennzeichnet, daß** das Höhenverstellorgan (64) als Druckluft-Justierbolzen (66) ausgebildet ist.

8. Vorrichtung nach einem der Ansprüche 1 bis 7, **dadurch gekennzeichnet, daß** die Höhenverstellvorrichtung (72) unterhalb des Bodens (22) angeordnet ist.

9. Vorrichtung nach einem der Ansprüche 4 bis 8, **dadurch gekennzeichnet, daß** die Verstelltraverse (52) mehrere, sich radial erstreckende, insbesondere drei bis sechs Quertraversen (58), aufweist.

10. Vorrichtung nach einem der Ansprüche 1 bis 9, **dadurch gekennzeichnet, daß** bei einem Boden, der aus unterschiedlichen Gruppen an übereinander gelegten Leitplatten aufgebaut ist, jede Gruppe mit einer Höhenverstellvorrichtung in Wirkverbindung steht.

## Claims

1. Apparatus for treating particle-shaped material (80), having a process chamber (13) for accommodating and treating the material (80), a base (22) of the process chamber (13) being composed of guide plates (26 - 31) which are placed one above the other in different planes and overlap one another and between which slots (36 - 42) are formed, via which process air (78) can be directed into the process chamber (13) with an essentially horizontal component motion, **characterized in that** there is a vertical-adjustment device (72) which interacts with the guide plates (26 - 31) and by means of which the distance between the guide plates (26 - 31) and thus the height of the slots (36 - 42) can be varied.

2. Apparatus of claim 1, **characterized in that** the vertical-adjustment device (72) is designed in such a way that the vertical distance between the guide plates (26 - 31) can be varied from zero up to a maximum distance.

3. Apparatus of claims 1 or 2, **characterized in that** the vertical-adjustment device (72) is designed in such a way that the guide plates (26 - 31) can be vibrated back and forth in the direction of the vertical adjustability.

4. Apparatus of anyone of claims 1 to 3, **characterized in that** the vertical-adjustment device (72) has at least one adjusting traverse (52) which is connected to each of the guide plates (26 - 31).

5. Apparatus of anyone of claims 1 to 4, **characterized in that** the vertical-adjustment device (72) has a vertical-adjustment member (64) arranged centrally in the base (22).

6. Apparatus of claim 5, **characterized in that**, at a base (22) which, as viewed radially from outside to inside, consists of annular guide plates (26 - 31) placed one above the other, there is a central upright vertical-adjustment member (64) which is connected to a radially inner end of a crosspiece (58) which is pivotably linked at its radially outer end.

7. Apparatus of claims 5 or 6, **characterized in that** the vertical-adjustment member (64) is designed as a compressed-air adjusting stud (66).

8. Apparatus of anyone of claims 1 to 7, **characterized in that** the vertical-adjustment device (72) is arranged below the base (22).

9. Apparatus of anyone of claims 4 to 8, **characterized in that** the adjusting traverse (52) has a plurality of radially extending crosspieces (58), in particular three to six crosspieces (58).

10. Apparatus of anyone of claims 1 to 9, **characterized in that**, in the case of a base which is composed of different groups of guide plates placed one above the other, each group interacts with a vertical-adjustment device.

## Revendications

1. Dispositif de traitement de produits en forme de particules (80), comportant une chambre de travail (13) pour la réception et le traitement du produit (80), un fond (22) de la chambre de travail (13) étant constitué par des plaques de guidage (26 - 31) superposées dans différents plans en se chevauchant les unes les autres et entre lesquelles se forment des fentes (36 - 42), à travers lesquelles l'air du processus (78) peut être injecté dans la chambre de travail (13) avec une composante de mouvement sensiblement horizontale, **caractérisé en ce qu'**il est prévu un dispositif de réglage de la hauteur (72), en liaison active avec les plaques de guidage (26 - 31) en vue de pouvoir régler la distance entre les plaques de guidage (26 - 31) et donc la hauteur des fentes (36 - 42).

2. Dispositif selon la revendication 1, **caractérisé en ce que** le dispositif de réglage de la hauteur (72) est conçu de telle sorte que la distance en hauteur entre les plaques de guidage (26 - 31) peut varier de zéro jusqu'à une distance maximale.

3. Dispositif selon la revendication 1 ou 2, **caractérisé en ce que** le dispositif de réglage de la hauteur (72) est conçu de telle sorte que les plaques de guidage (26 - 31) peuvent vibrer selon un mouvement de va-et-vient dans la direction de la possibilité de réglage en hauteur.

4. Dispositif selon l'une des revendications 1 à 3, **caractérisé en ce que** le dispositif de réglage de la hauteur (72) comporte au moins une traverse de réglage (52), qui est reliée à chacune des plaques de guidage (26 - 31).

5. Dispositif selon l'une des revendications 1 à 4, **caractérisé en ce que** le dispositif de réglage de la hauteur (72) comporte un organe de réglage de la hauteur (64) disposé en position centrale dans le fond (22).

6. Dispositif selon la revendication 5, **caractérisé en ce que**, dans le cas d'un fond (22) qui est formé, vu dans le sens radial de l'extérieur vers l'intérieur, par des plaques de guidage (26 - 31) superposées en forme d'anneaux, il est prévu un organe de réglage de la hauteur (64) central et vertical, qui est relié à une extrémité radialement intérieure d'une barre transversale (58), qui est articulée de manière pivotante à son extrémité radialement extérieure.

7. Dispositif selon la revendication 5 ou 6, **caractérisé en ce que** l'organe de réglage de la hauteur (64) est conçu sous forme de boulon d'ajustage (66) à air comprimé.

8. Dispositif selon l'une des revendications 1 à 7, **caractérisé en ce que** le dispositif de réglage de la hauteur (72) est placé en dessous du fond (22).

9. Dispositif selon l'une des revendications 4 à 8, **caractérisé en ce que** la traverse de réglage (52) comporte plusieurs barres transversales (58), en particulier trois à six, orientées dans le sens radial.

10. Dispositif selon l'une des revendications 1 à 9, **caractérisé en ce que**, dans le cas d'un fond qui est constitué par différents groupes de plaques de guidage superposées, chaque groupe est en liaison active avec un dispositif de réglage de la hauteur.
